# EUROPEAN PATENT APPLICATION

(11) **EP 2 472 197 A1**
(43) Date of publication of application: **04.07.2012**
(21) Application number: 10811205.3
(22) Date of filing: 21.07.2010
(51) Int. Cl.: F24J 2/54, H02N 6/00, G05D 3/00

(54) **TWO-AXLE SOLAR TRACKING SYSTEM AND DEVICE FOR SOLAR PANELS**

(30) Priority: 24.08.2009 US 274927 P
(71) Applicant: Liao, Henry H., Taiwan 111 (CN)
(72) Inventor: Liao, Henry H., Taiwan 111 (CN)
(74) Representative: Schweiger, Martin
(86) International application number: PCT/CN2010/075376
(87) International publication number: WO 2011/023045

(57) **Abstract**

A two-axle solar tracker is provided. The two -axle solar tracker includes a ground post (20), a rotating head (30), a horizontal beam (50), an azimuth linear actuator and an elevation linear actuator (58). The two-axle solar tracker is used in the solar panels or the concentrated solar panels. The azimuth linear actuator is set between the ground post and the rotating head driving the rotating head to rotate horizontally. The elevation linear actuator is set between the rotating head and a bear frame driving the frame to form elevation rotating. The barycenter of the axis of the rotation is on the horizontal beam.

## Description

### BACKGROUND OF THE INVENTION

### 1. Field of the Invention

The present invention relates to a simplified and lower cost two-axes tracker for solar PV (photovoltaic) or CPV (concentrated photovoltaic) solar panel, as well as heliostat solar reflectors and solar Stirling engine. In particular, the disclosure addresses a simplified and gravity centered tracker structure with low cost single or dual linear actuators mounted on the side of ground post which is easier for replacement and maintenance at lower cost.

### 2. Description of the Prior Art

Photovoltaic solar panels are gradually becoming a fixture on roof tops in residential street. The sun exposure to fix panel on the roof is proportional to sine of sun elevation angle to the panel. In other words, solar collection on horizontal flat panel at sunrise and sunset are near zero at lowest elevation angle. At 34 degree latitude location, solar panel could collect 49% more power if mounted on a two-axes solar tracker relative to a horizontal fixed panel. The PV panels commonly seen on residential roof are not practical to have a solar tracker. In a solar farm, mounting photovoltaic solar panels on a tracker is feasible if the tracker cost is not predominant. In CPV (Concentrated Photovoltaic) systems, the solar panels must face the sun directly to concentrate solar beam with optical accessory. The cost of traditional two-axes tracker constitute a major cost item for PV and CPV systems. In PV systems, if the solar tracker cost more than half of the solar panels cost, it might be as well ignore the solar tracker since the improvement does not worth the investment. In addition, moving parts of solar tracker has lower reliability than fixed parts. However, it is mandatory for CPV systems to collect sun rays perpendicular to the panel to function properly.

In concentrated solar thermo power (CSP) applications, solar trackers are also used to reflect and concentrate sun rays to a center chamber. A great number of solar reflectors are attached to two-axes trackers in a large field to collect the solar energy focusing on a centralized heating chamber of water or molten salt for turbo engine electricity generation. Such large solar plant is commonly called "heliostat". The cost of solar trackers constitutes a major portion of total cost for heliostat farm. In yet another field of application, the solar thermo Stirling engine also needs two-axes sun tracking to collect concentrated solar rays to heat up the Stirling engine in order to generate electricity. This disclosure will benefit the solar thermo concentration with its simplified installation, lower parts cost, lower maintenance and longer durability for a large solar farm.

A typical two-axes solar tracker consists of a ground post secured to the ground structure with concrete base. A better ecological ground post uses a helical pile post drilling directly into the ground without concrete base. On top of the ground post, a slewing drive is mounted to support the weight of solar panel and azimuth rotation at the same time. On top of the slewing drive, a linear actuator is attached between the slewing drive and solar panel structure for the lifting of solar panel in the elevation direction. Two axes of motions in azimuth and elevation will drive the solar panel to face the sun directly.

However, there are a few drawbacks with a traditional tracker. 1) The slewing drive not only has to support the entire weight of the panel, but also has to bear the lateral force and torque caused by constant tilting and the wind load on the solar panel. 2) The weight of solar panel and torque caused by the lateral force makes the size of slewing drive highly dependant on the size and weight of solar panel. The components of worm drive and the rotating gear must be packaged together with the ball bearings which support the entire weight and torque applied to the slewing drive, which makes the slewing drive very bulky. 3) If any fault occurred in the slewing drive, the entire solar panel has to be dismantled in order to repair or replace the slewing drive. 4) With the lifting mechanism of a single solar panel by the linear actuator, the center of gravity of solar panel with respect to the pivoting point of slewing drive is constantly changing which mandate the slewing drive to carry the maximum torque possible. Therefore, the slewing drive and the linear actuator must be designed for the maximum torque and lateral force of the tilted panel, which makes a traditional two-axes tracker very bulky and costly. This disclosure proposes a simplified solar tracker at a very low cost, light weight and low maintenance for the benefit of coming solar energy revolution.

### BRIEF SUMMARY OF THE INVENTION

With the above mentioned deficiencies, the subject disclosure may resolve some or all of the issues related to a traditional two-axes tracker. In the first aspect of the invention, the disclosed two-axes tracker is designed to keep the solar panel weight and lateral force away from the azimuth and elevation drives. The weight of the solar panel will sit on top of rotating head, which is looping directly on top of the ground post with upper and lower bearings fitting in-between. The rotating head and bearings not only carry the entire panel weight in the vertical direction, but also leveraged on the torque caused by the wind load of solar panel in the lateral direction. In addition, the upper and lower bearings are selectively using low cost, maintenance free bushing materials for long term usage. Therefore, the azimuth drive, which is attached to the side between the lower post and upper rotating head, is free from both the vertical (gravitational weight) and lateral torque of the solar panel. Hence, the azimuth drive demands very little force for turning the entire solar panel.

In another aspect of the disclosure, the solar tracker will be divided into two sections of equal weight carried by a horizontal beam (tubing) with center of gravity on top of the cylindrical rotating head. Each section of the solar panels are also balanced on the horizontal beam, enabling rotation of two solar panel sections around the center line of gravity on the horizontal beam freely. Therefore, the elevation drive of the solar panel also demands very little force for rotation similar to the azimuth drive.

In another aspect of the disclosure, the azimuth and elevation drivers can be mounted as an accessory to the side of the ground post and rotating head with nuts and bolts, which can be easily installed, removed, replaced in routine maintenance by a single person. This is the major difference from the traditional tracker, where the slewing drive is located at the center between the ground post and solar panel. If anything happen to the slewing drive, the entire solar panel has to be removed or dismantled. By attaching the azimuth drive on the side proposed by this disclosure, it can extend the life of solar tracker by routine maintenance or replacement of low cost linear actuator.

In yet another aspect of the disclosure, the two-axes solar tracker is designed with a wind lock device which can be activated whenever a strong wind exceeds a threshold. The wind lock device uses electromagnetic force to lock up the solar tracker in wind neutral position firmly on the ground post using two electromagnetic activated locks. This will bear the vibration and pounding of solar tracker exercised on the linear actuators during strong wind. Furthermore, in windy areas with constant blowing wind, this wind lock device can be used in a stepwise wind lock to protect the linear actuators between activations. This will greatly prolong the life span of linear actuator and the solar tracker from wind abuse.

These and other features, aspects and advantages of the present disclosure will become understood with reference to the following description, appended claims and accompanying figures.

### BRIEF DESCRIPTION OF THE DRAWINGS

Fig. 1 is the general view of the two-axes tracker with rotating cylindrical rotating head before the attachment of linear actuators.
Fig. 2 is a sectional view of single linear actuator attachment to the ground post and rotating head for azimuth rotation.
Figs. 3A-3C illustrate three top views of upper rotating head rotation versus ground post by linear actuator extension.
Fig. 4 is a side view of tracker azimuth and elevation rotation by two linear actuators.
Figs. 5A-5C show an alternative solar tracker frame mounting with rotation around fixed horizontal beam.
Fig. 6 is a sectional view of double linear actuators for azimuth rotation.
Figs. 7A-7C illustrate three top views of double linear actuators azimuth rotation.
Fig. 8 is a sectional view of stepping motor and gear attachment to the ground post and rotating head for azimuth rotation.
Fig. 9 is a sectional view of wind lock devices for azimuth and elevation lock.
Fig. 10 is a modified 2-axes tracker for light pole mount.

### DETAILED DESCRIPTION OF THE INVENTION

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures.

### TRACKER SUPPORTING STRUCTURE

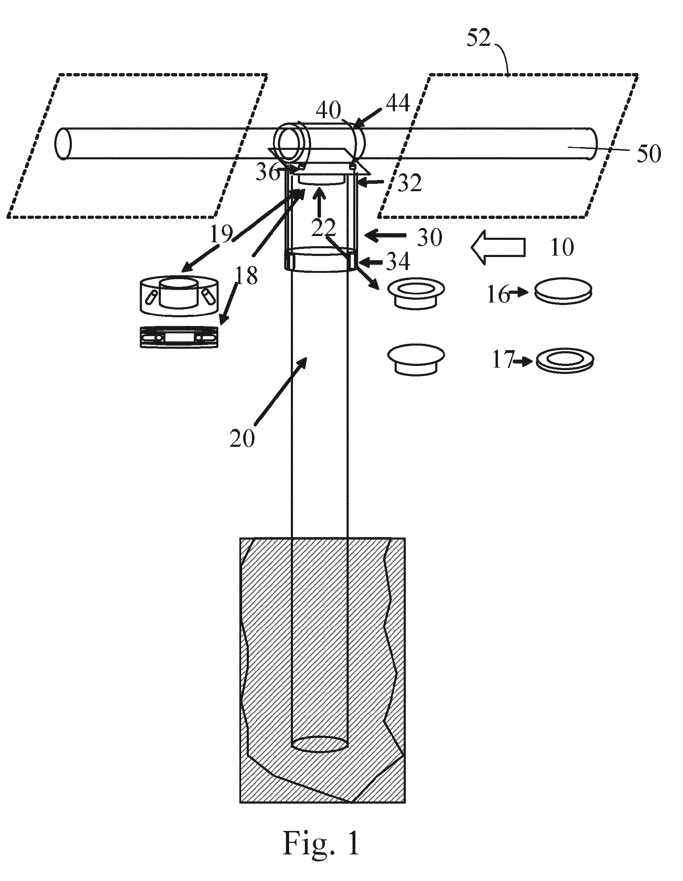

As shown in Fig. 1, one aspect of the disclosed two-axes tracker generally designated as 10, includes a fixed cylindrical ground post 20, with a cylindrical rotating head 30 looped on top of the ground post 20. The rotating head 30 is made of a cylindrical tube with top end sealed (welded) by a top square plate 36, or other shape such a U-shaped pipe holder, etc. Preferred embodiment of the ground post 20 and rotating head 30 are made of rust-proof steel material which attract magnet. Inside the rotating head, the lower end is a cylindrical bushing 34 tightly fits between the gap of the ground post and the cylindrical rotating head. The lower bushing 34 not only facilitates coaxial rotation of the rotating head versus the ground post, but also leverages on the lateral torque exercised on the solar panel by the wind load. Inside the top end of rotating head 30, a cylindrical flanged bushing 22 (which could be closed at the flange top) is tightly fitted between the rotating head and the ground post. In other words, the top flange of bushing 22 fits the inner wall of rotating head 30 and bottom cylinder of 22 fits inside the inner wall of ground post 20. Therefore, the top flanged bushing 22 supports the entire weight of tracker frame and solar panel in the vertical direction and provides pivot point of lateral wind load torque leveraged by the lower bushing 34. Preferred embodiment is putting another thrust washer bushing on top of flanged bushing for easier rotation. However, commercial flanged bushing may not fit exactly the inner diameter of outer rotating head and inner diameter of ground post. Therefore, the flanged bushing can be replaced by top disk bushing 16 or washer busing 17 as depicted at the right hand side of flanged bushing in Fig. 1; where the disk diameter can be smaller than the inner diameter of rotating head. It is even better to use double layers of disk or washer bushings with lubricant sides face each other to facilitate smooth frictionless rotation of the rotating head. The lubricant could be either liquid or solid lubricant with no refill needed throughout the life time of tracker. Additional side wall bushing identical to 34 inside the rotating head at top and bottom ends are needed to maintain coaxial rotation and lateral support whenever top disk or washer bushings are used. Preferred embodiment of rotating bushings is made of metal alloy materials with embedded solid lubricant.

Alternative to flanged bushing 22 is using a single piece tapered roller bearing 19, or using a combination of thrust roller bearing 18 on the top and a cylindrical bushing identical to 34 at the side wall. However, the top end of ground post needs to be welded with a cylindrical neck to fit into the center hole of a tapered roller bearing or a thrust roller bearing. The advantage of using thrust roller bearing is that its diameter does not have to fit exactly the inner diameter of rotating head; since identical cylindrical bushings 34 are used at top and bottom ends to facilitate rotating head coaxial rotating and bear the lateral force. Alternative to cylindrical bushing 34 is a cylindrical roller bearing, or specifically a needle bearing to narrow the gap between the rotating head and the ground post. Using roller bearing, the rotating head can be rotated faster with less friction. However, solar tracker azimuth rotation of 180 degrees in 12 hours daylight is a very slow rotation which enables the usage of lower cost bushings. In addition, the force needed for rotation is mainly to counter the wind load on solar panel with a small proportion used for rotating head.

Flanged bushing, disk or washer bushings seem to provide the best combination of lower cost and maintenance free for long term usage under rough weather conditions. In addition, the cylindrical bushing, circular flanged bushing and disk or washer bushing designed for industrial heavy machinery are commercially available in many sizes. The bushings are made of porous alloy, brass, bronze or synthetic materials. It also provides low friction rotation and low maintenance with one time solid lubricant for long term usage under extreme weather conditions.

On top of the rotating head, an elongated cylindrical horizontal beam (tubing) 50 is secured with U-clamps 44 to the top plate 36 with a cylindrical bushing looped in between as illustrated in Fig. 1. The top cylindrical bushing is made of similar material as the bushing inside the rotating head. The horizontal beam 50 is preferably seamless galvanized steel tubing for better rotation. On both sides of horizontal beam 50, two symmetrical tracker frame 521 and solar panel 52 are attached. The horizontal beam 50 is balanced with center of gravity on the cylindrical bushing 40. Furthermore, the tracker frames 52 at both sides of rotating head 30 are further balanced on the horizontal beam 50 as center line of gravity. Therefore, two sides of solar panels 52 on the tracker not only balanced on the center cylindrical bushing 40, but also balanced on the beam 50. The balanced weight on both axes requires two symmetrical solar panels 52 being mounted on the beam 50. An alternative mounting of tracker frame with non-rotating beam 50 will be discussed in later section. This tracker mounting is quite different from traditional solar panel mounting with one big panel pivoted at the slewing drive and lifted instead of rotated by a linear actuator. Two sided panels mounting also has the advantage of allowing near zero degree elevation to catch the sunrise and sunset on the horizon. In addition, it is easier to dispose dust and water in vertical panel position at night. Fig.1 only illustrates the solar tracker without azimuth and elevation actuators. It demonstrates that the tracker can be rotated in azimuth and elevation with minimal force before any electro-mechanical driver is attached. This is the key difference from the traditional tracker and advantage of this disclosure.

At this point, those skilled in the art may vary the rotating head attachment to the horizontal beam in many ways. For example, a square or rectangle beam may replace the cylindrical beam as long as the section atop the rotating head is cylindrical; such as a square beam can fit inside cylindrical tube in the middle section. A square or rectangle beam may be more convenient for solar panel frame mounting.

### AZIMUTH ROTATION WITH SINGLE LINEAR ACTUATOR

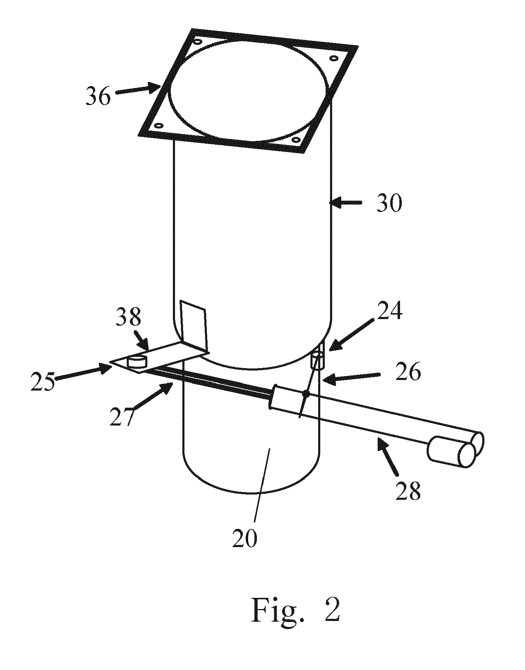

Fig. 2 illustrates the sectional view of azimuth rotation with a single linear actuator attached to the side between the rotating head and ground post. An L-shaped bracket 38 is attached onto the upper rotating head 30 with open end linked to the jack head 27 of linear actuator via a horizontal hinge 25 (a bolt fits on two holes). The body of linear actuator 28 is attached to the ground post 20 via a rotating arm 26 which is hinged on 24. Hinge 24 is built like a door hinge fixed on the ground post 20 with an extended bar. Preferred embodiment of the rotating arm 26 is to twist the end ninety degrees in order to clamp on the linear actuator 28 horizontally. It is more logical to attach L-bracket 38 to the upper rotating head 30 since it has larger diameter than ground post 20; and therefore shorter L-bracket 38 is needed. The main body of linear actuator 28 is clamped by the rotating arm 26. Preferred embodiment is clamping on top end of linear actuator body perpendicular to the arm. Reverse attachment of linear actuator and jack head on rotating head and ground post is possible, but it is less preferred.

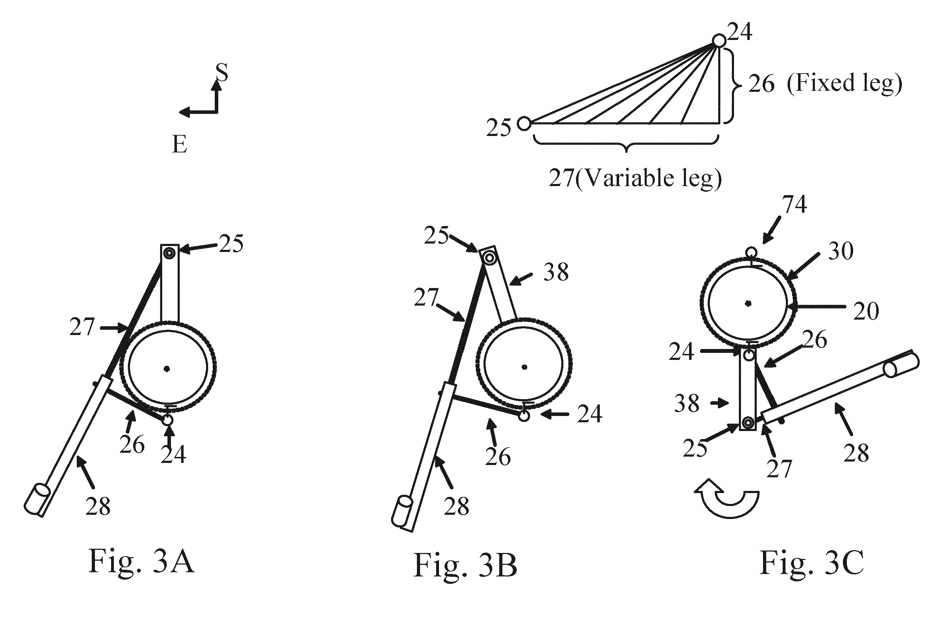

In Figs. 3A-3C, the rotating mechanism of the upper rotating head 30 versus the lower ground post 20 is illustrated from the bottom (or top) view. The smaller solid circle is the ground post 20, while the larger dotted circle 30 is the cylindrical rotating head. The initial position of the tracker is shown in Fig. 3C when L-bracket 38 and hinge 24 are aligned. The L-bracket 38, arm 26 and jack head 27 form a right triangle with arm 26 and jack head 27 as two legs. This is the position of the tracker when the solar panel normally facing the east in the morning. As the linear actuator jack head extends as illustrated in Fig. 3B, the jack head will push the long arm 38 together with the rotating head 30 to rotate clockwise versus ground post 20. *(The actuator 28 will not be pushed back since in geometry theory with one leg 26 of right triangle fixed and the other leg 27 extends, the "hypotenuse" line between hinges 24 and 25 must increase in length as depicted in the upper right triangle of* *Fig. 3B**. Therefore, rotating head 30 must be rotated clockwise to increase the hypotenuse which results in the entire tracker frame rotating clockivise).* The solar panel will be pushed to face south (assuming the tracker is located at northern hemisphere) in Fig. 3B. In southern hemisphere, the linear actuator would be attached to opposite side. When the linear actuator is near fully extended at Fig. 3A, the bracket 38 and rotating head 30 is pushed near 180° opposite the hinge 24. Therefore, the solar panel is rotated to face the sunset. A little more then 180° rotation is possible providing the L-bracket 38 and rotating arm 26 is made longer. This is needed if the tracker latitude location is just under the tropics. If the tracker is located at latitude higher then the tropics, the actuator attachment needs not be changed throughout all seasons of the year. If the tracker is located between the two tropics, especially near the equator, dual hinges 24, 74 can be installed on opposite side of ground post 20 as illustrated at Fig. 3C. On the day when the sun orbit is crossing the zenith point in the summer, rotating arm 26 and linear actuator can be hinged to opposite side hinge 74 and the rotating head L-bracket 38 will be rotated 180°to rotate in opposite plane facing the sun orbit.

Those skilled in the art can easily change the configuration of the linear actuator attachment with different length and different angle of attachment between the ground post, rotating head, and it is not necessary to form a right triangle in the initial position. By changing this attachment, it may make azimuth rotation to a greater angle. But it does not change the essence of the disclosure of using linear actuator to do the azimuth rotation.

### ELEVATION ROTATION WITH LINEAR ACTUATOR

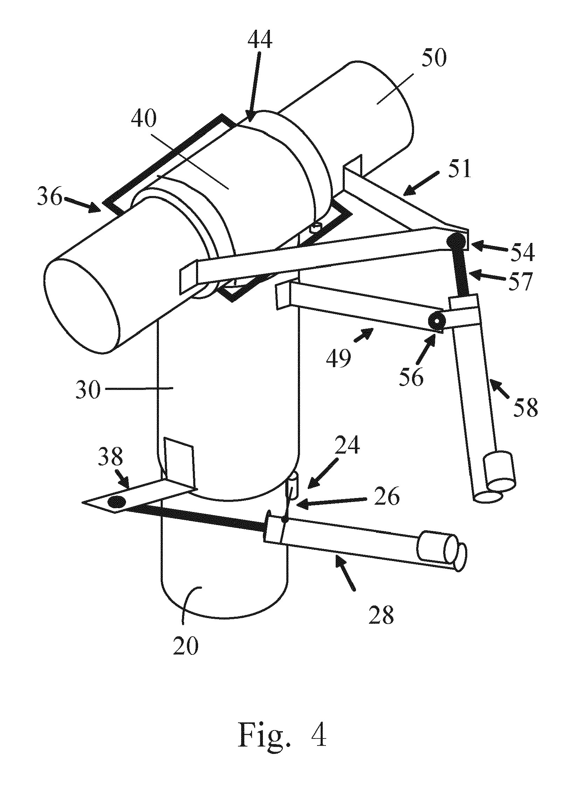

Fig. 4 illustrates the attachment of the linear actuator for the rotation of the solar panel in elevation direction. An upper V-shaped bar 51 is attached to both sides of the horizontal beam 50 with hinge 54 at open end. A lower fixed bar 49 is attached to the rotating head 30 horizontally with hinge 56 at open end. The hinges 54 and 56 are attached to the jack head and body of the linear actuator 58 respectively. Alternative to V-shaped bars, the hinge 54 can be attached directly on the tracker frame. As the jack head of linear actuator 58 extends, the V-shaped bar 51 will rotate the horizontal beam 50 and tracker frame toward lower elevation angle (perpendicular line to the panel versus horizon). Since both solar panels are balanced on the beam 50, the rotation of solar panel demands little rotational torque. Normally, the maximum required elevation rotation of solar panel is from zero degree (vertical position) to 90 degree (flat position). If more than 90 degrees rotation is needed, it can be accomplished by simply attaching the horizontal bar 49 to a lower position.

As one can observe in Fig. 4, the rotation of azimuth linear actuator 28 shall not be interfered by elevation linear actuator 58. Therefore, the V-shaped bar 51 and fixed horizontal bar 49 must keep clearance of the azimuth actuator 28. The actuator 58 can be shorter length with shorter horizontal bar 49 and V-shaped bar 51, or the rotating head 30 can be made longer. Alternatively, one shall design the length of azimuth actuator 28 just long enough to rotate the rotating head 30 to 180 degree while keeping the horizontal bar 49 long.

To those skilled in the art, the V-shaped bar and horizontal bar can be changed in shape and attachment mechanism, such as changing of V-shaped bar 51 into U-shaped and changing single bar 49 into parallel bars to hinge linear actuator from both sides.

### ALTERNATIVE ELEVATION ROTATION WITH NON ROTATING BEAM

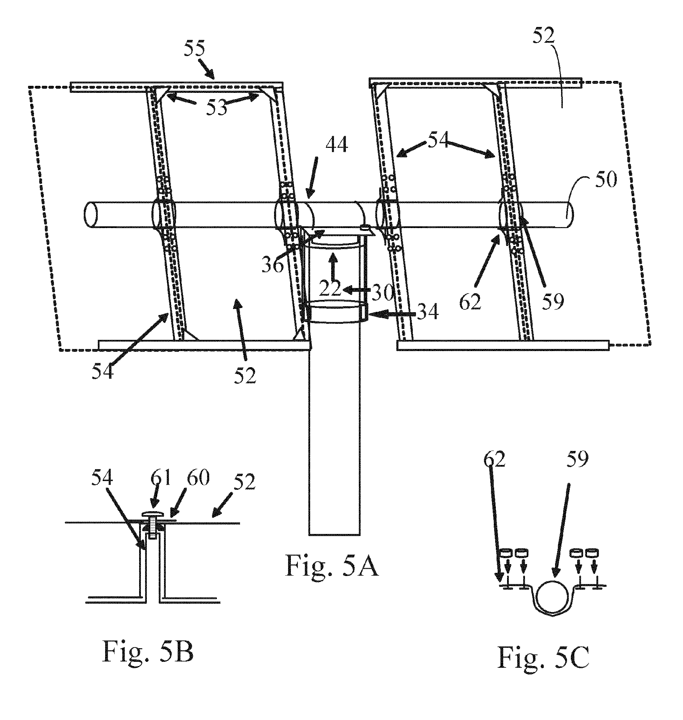

Figs. 5A-5C illustrate an alternative of rotating the tracker frame with horizontal beam fixed directly on the top plate 36 of rotating head. The horizontal beam is secured and fixed to the rotating head plate with simple U-bolts type of device 44 without bushing 40. The horizontal beam is not rotated versus the rotating head, but rather the tracker frame is rotated with respect to the horizontal beam. Multiple bushings 59 are secured between the tracker frame crossing beams and the horizontal beam with clamps or U-bolts. Preferred embodiment will be a pillow block clamp 62 securing the cylindrical bushing 59 on the crossing beam 54. The pillow block clamp 62 and cylindrical bushing 59 is depicted at Fig. 5C.

If flat photovoltaic solar panels are mounted on the tracker, the crossing beam may be a reversed T-beam with the height of T matching the solar panel depth. Preferred embodiment of the T-beam is made from bended metal strip with a center reversed U-shaped T-post as depicted in Fig. 5A. The solar panel 52 can be further secured on the U-shaped T-post from the top edge of panel with clamping brackets 60 and screw 61 drilled into the bottom of T-post. With cylindrical bushings, the crossing T-beams 54 of the tracker frame can be rotated around the fixed horizontal beam 50 by the linear actuator 58. To complete the tracker frame, L-beams 55 can be connected to both end of crossing T-beams to make a rectangular tracker frame. Furthermore, four triangular plates 53 can be attached to four corners joining the L-beam and T-beam for rectangular tracker frame support. The length and spacing of T-beams shall accommodate the dimension of solar panels 52 to be mounted. One difference from previous rotating horizontal beam is that the V-shaped bar 51 must be attached to the tracker frame rather than on the fixed horizontal beam.

The alternative installation using rotation of T-beam rather than rotation of horizontal beam can accommodate larger tracker frame for larger solar panel output. Comparing to previous embodiment with one bushing carrying the entire tracker load, the tracker frame rotation on horizontal beam distributes the larger tracker load on multiple bushings. Furthermore, non-rotating of the horizontal beam put less stress on the elevation linear actuator. The alternative installation is preferred on larger tracker.

### AZIMUTH ROTATION WITH DUAL LINEAR ACTUATORS

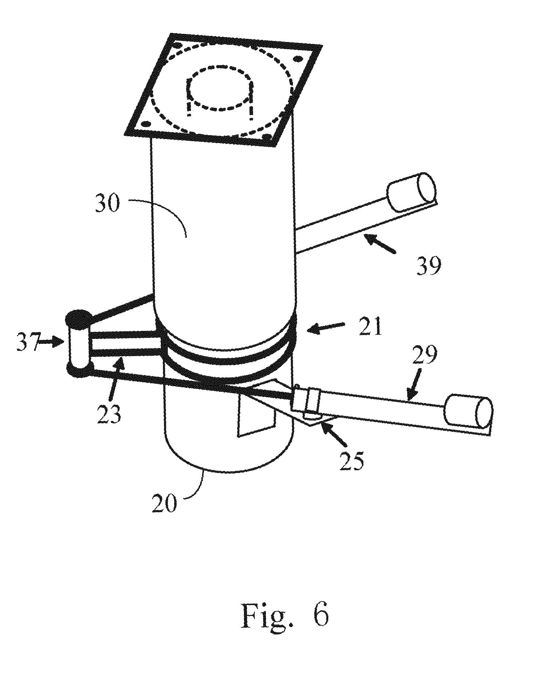

Yet another aspect of the disclosure is the use of two linear actuators for azimuth rotation as illustrated in Fig. 6. Two linear actuators 29, 39 are attached to the ground post 20 and rotating head 30 on L-brackets 25 and 35, respectively. Both attachments on the L-brackets 25 and 35 are via horizontal rotating hinges. In between the upper and lower linear actuators, a rotating ring 21 encircles and attached to the ground post 20 via a cylindrical bushing or needle bearing. A horizontal arm 23 is fixed to the rotating ring 21 at one end, and attached with a cylindrical hinge 27 on the open end. Cylindrical hinge 27 is a simple tubing with both ends bolted with washer bushings on the jack head rings of two linear actuators at the top and the bottom, respectively.

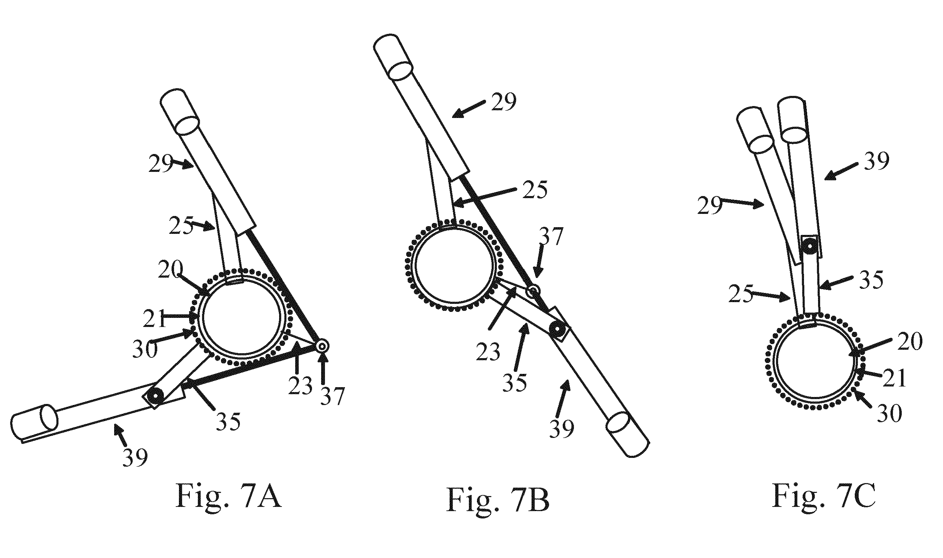

The rotating mechanism of dual linear actuators is illustrated in Figs. 7A-7C. On Fig. 7C is the closed position of two linear actuators; where the linear actuator 39 is on top of linear actuator 29 with rotating ring 21 and hinge 27 in between. When the lower actuator 29 extends, the upper actuator 39 and rotating head 30 will be pushed to turn clockwise, together with the rotating ring 21, arm 23 and hinge 27. In Fig. 7B, the position of rotating head 30 is turned about 120° when the lower actuator 29 is fully extended while the actuator 39 is still in the initial position. When the upper actuator 39 is fully extended, the rotating head 30 attached to actuator 39 is further rotated about 120 more degrees at Fig. 7A. In the second rotation, the center ring 21, horizontal arm 23 and rotating hinge 27 stay in the same position. Therefore, the upper rotating head 30 can be rotated about 240 degrees with respect to the lower ground post 20.

The advantages of using two linear actuators are twofold; 1) the rotating head 30 can be rotated more than 180 degrees to around 240 degrees, 2) two shorter linear actuators are used instead of a single long actuator. By rotating 240 degrees, the area of the world between two Tropics zones can benefit without moving the actuators whenever the Sun orbit is crossing the Zenith point. These tropical zones of the world enjoy the most sunshine days throughout the year. The disadvantage of dual linear actuator is that the actuators must be very short to make clearance for the solar panels in low elevation angle. However, if traditional lifting of solar panel for elevation rather than rotating for elevation is used, the dual linear actuators may not have the problem of clearance.

### AZIMUTH ROTATION WITH STEPPING MOTOR AND GEARED DRIVE

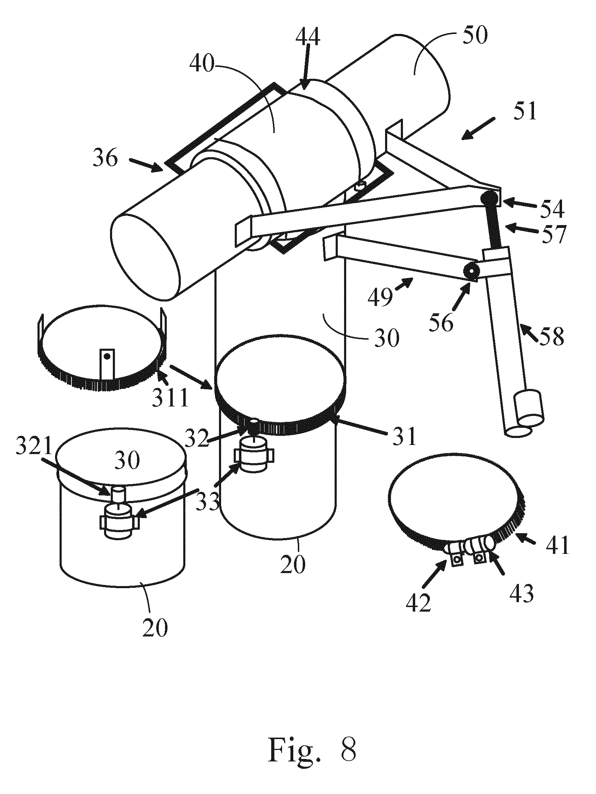

Yet another aspect of the disclosure is the use of direct stepping motor drive with gear ring looped on either the rotating head or the ground post as illustrated in Fig. 8. For illustration, the gear ring 31 is fixed on the rotating head 30. The direct drive stepping motor 33 is then attached to the ground post 20 with matching rotor gear 32. Reduction gear may be used for the stepping motor to get finer rotation resolution. Alternatively, the stepping motor and gear ring can be changed in positions. It is a custom designed fitting to mate the rotor gear 32 and gear ring 31 for desired resolution in azimuth rotation. If the gear ring has 720 teeth, then 180° rotation will take 360 steps of geared rotation. If each stepping of motor makes one tooth step without gear reduction, it results in half degree of azimuth rotation. Finer resolution requires either increase the teeth number of gear ring or gear reduction in stepping motor. It is noticed that a circular gear ring 31 is hard to replace after the tracker is installed in place. Instead, a half circle gear ring 311 depicted at the left of Fig 8. is used for half circle or more rotation. Half circle gear ring 311 has the advantage of retrofitting onto the rotating head if the original ring wore out or rusted after long term usage. The half circle can be more than 180 degrees which can be looped up from the smaller ground post while installation.

Another alternative of geared ring with stepping motor is using a horizontal worm drive gear 32 mating with a slanted gear ring 41 as depicted in the lower right corner of Fig. 8. A stepping motor 43 is coupled with the worm drive 42 as illustrated. The worm drive 42 is used mostly in existing two-axes tracker slewing drive packed together with the azimuth rotating ball bearing ring. Using worm drive with slanted gear ring together with motor gear reduction can achieve desired rotation resolution without changing the gear ring teeth number. It also has smoother rotation with slanted gear teeth.

The advantage of this approach is the stepping motor and geared ring takes little space on the rotating head and ground post to avoid interference with elevation actuator. Also, the rotating head can be rotated 360 degrees potentially. It could be lower cost if mass production of identical geared motor is needed in a large scale solar farm. However, the disadvantages of this approach are: 1) The gear ring and stepping motor are exposed to adverse weather condition which need to be covered and sealed to protect the gear and motor, 2) The gear ring and rotor gear has to be custom made for every size of rotating head, 3) The mating between gear ring and stepping motor must be tightly fitted which may become a problem after wind load damage and long term vibration, 4) Replace the wear out gear ring must remove the rotating head or two piece gear ring being designed.

### AZIMUTH ROTATION WITH STEPPING MOTOR AND MAGNETIC ROTOR

Yet another aspect of the disclosure is the use of direct stepping motor drive without a geared ring on the rotating head. Instead, a permanent or electromagnetic magnetic rotor 321 is used for the rotor of the stepping motor with or without reduction gear as depicted at the lower left corner of Fig. 8. The rotating head 30 must be made of steel material attractable by the magnetic rotor. It is equivalent to a gearless friction rotor 321 versus the rotating head 30. However, the magnetic attraction by the rotor ensures non-slipping in the friction drive between the rotor 321 and the rotating head 30. The rotating force or rotating friction is proportional to the size of magnetic rotor 321. Therefore, the larger the size and the heavier the weight of the tracker frame load, the stronger the magnetic force needed. However, since the larger tracker requires larger ground post 20 and rotating head 30, the magnetic rotor 321 can be larger as well. Furthermore, if electromagnetic rotor is used, the attraction force is proportional to the solenoid current and number of rings of winding wire. The rotor can be smaller diameter with much stronger force than the permanent magnet.

The advantage of magnetic rotor is the simplicity and lower cost of the azimuth drive. Without the gear ring and geared rotor, it removes the problem of corrosion, rain and dust cover, maintenance and lubrication. The ratio of the diameter of rotating head 30 divided by the diameter of magnetic rotor 321; multiplied by the steps per revolution of stepping motor will be the azimuth resolution in one revolution. A resolution of one to two degrees is adequate for a photovoltaic solar panel. Higher degree of resolution needs reduction gear in the rotor for higher precision systems such as CPV or Heliostat tracker.

### WIND LOCK DEVICES FOR AZIMUTH AND ELEVATION ROTATIONS

It is shown in Fig. 3A-3C that the installed solar panel 52 is best to be aligned with L-bracket 38 to avoid interference with the linear actuator 28. As depicted at Fig. 3C, the jack head 27 force vectors is largest since the jack head is near perpendicular to the L-bracket 38 and the solar panel 52 in Fig. 3A, the force vector is smallest with slanted angle between the jack head 27 and L-bracket 38. This position is not good for the wind load pushing on the linear actuator at a small slanted angle. For elevation rotation shown in Fig. 4, the problem becomes even worse when fully extended jack head of linear actuator 58 with smallest slanted angle. It must stand up against maximum side blowing wind on near vertical solar panel.

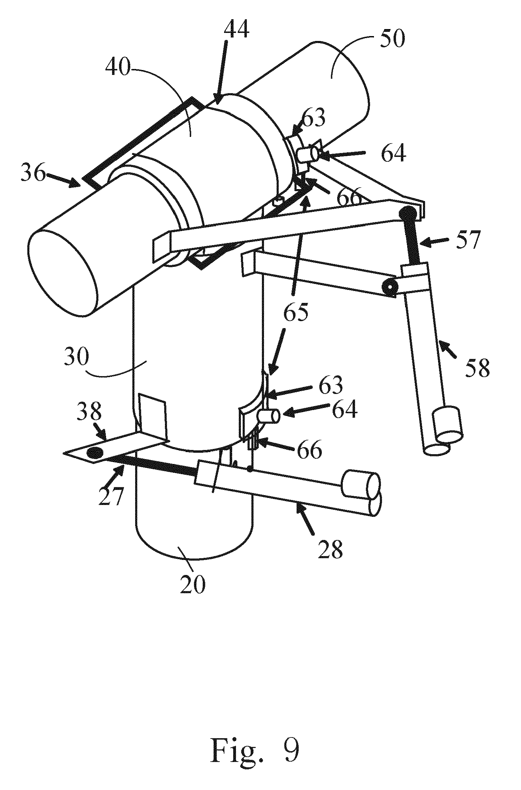

A proposed solution to the above problem is using an electromagnetic wind lock devices 65 as depicted in Fig. 9. Since both rotating head 30 in azimuth rotation and horizontal beam 50 in elevation rotation is cylindrical shaped, an electromagnetic lock shaped like an old style automobile drum brake is used. The difference is that the drum brake uses friction force for braking while the wind lock uses the electromagnetic attraction force for locking. In Fig. 9, the rod 63 of an electromagnetic lock device 65 is drum shaped matching cylindrical tubing with a solenoid activation coil 64 surrounding the rod at back. When solenoid 64 is activated by DC current, the rod 63 will be magnetized to attract to the rotating head 30 or the horizontal beam 50 both made of steel for wind locking. However, in the design when horizontal beam is fixed with rotating tracker frame, the electromagnetic rod head has to be designed to attract the tracker frame. The wind lock device 65 is attached to the ground post 20 and top plate 36 with securing brackets 66 for the azimuth and elevation wind lock devices 65, respectively. The wind lock devices 65 are useful devices to protect the linear actuator in the flat solar tracker position to counter strong wind exceeding designed threshold.

In this disclosure, we propose an even more useful application of the wind lock device. In windy places such as costal areas when the solar panel is under constant wind assault, the linear actuators will be under perpetual wind abuse and prone to failure. An innovative idea is adopting a stepwise wind lock to counter constant blowing wind using the same wind lock device. The procedure of stepwise wind lock is described as follows: 1) The wind locking period down-counter reaches zero at the tracker controller, 2) The electromagnetic solenoid 64 is commanded by the controller to release rod 63 to unlock position, 3) The linear actuator 28 or 58 is commanded by controller to rotate one step in azimuth or elevation direction, 4) The wind lock rod 63 is activated to lock up the tracker in current position and the tracker controller restart the locking period down counter.

It is a very slow motion for the tracker rotation in a day. The most azimuth rotation is 180 degrees, while the most elevation rotation is only 90 degrees. If the rotation is happened at equinox day with 12 hours of day light, each degree of azimuth rotation takes 4 minutes while elevation rotation takes 8 minutes. On the other hand, each step of linear actuator activation may take only fraction of second. Therefore, the solar tracker is in the locking state for majority of time. The wind locking between consecutive activations will alleviate the linear actuator from constant wind load vibration and pounding. This will prolong the life of linear actuators and therefore increase the life of solar tracker in windy areas.

### MOUNTING TWO-AXES SOLAR TRACKER ON LIGHT POLE

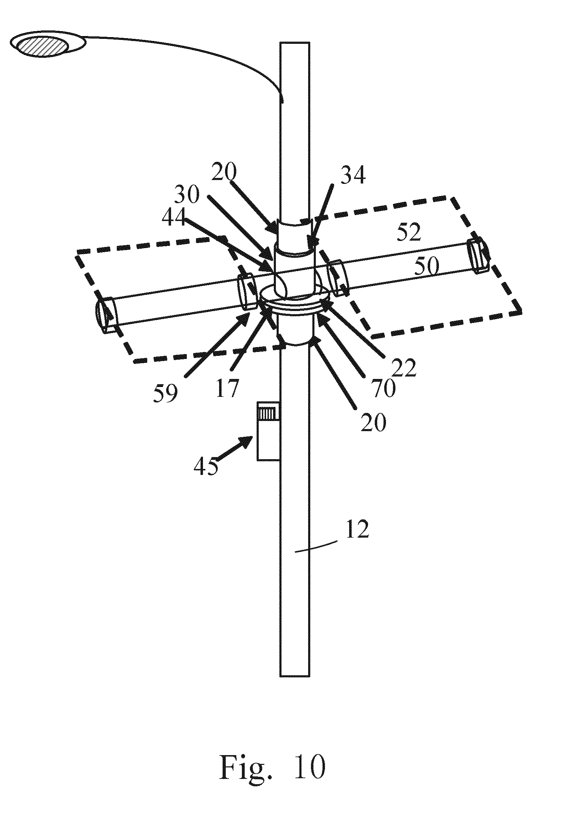

Fig. 10 illustrates subject two-axes tracker modified to be mounted on a light pole. Since the light pole is not uniformly cylindrical shaped with the base larger than the top, an inner uniform cylindrical tubing 20 is looped and secured on the light pole at the top and bottom ends. The cylindrical tubing substitute the ground post 20 in Fig. 1. But there is an extruded flange ring 36 attached on the bottom part of tubing 20 to serve similar function of holding and supporting the rotating head 30. The rotating head 30 is build like a flanged bushing with the bottom flange sitting on top of extruded flange 36 of inner tubing 20. An optional thrust washer 17 is inserted between the flange ring 36 and flange bushing 30 facilitating easier rotation. Also, there are optional upper and lower bushings 34 inserted fittingly between the inner tubing 20 and outer rotating head 30 facilitating easier rotation and bear the lateral torque and force. However, if the outer lining of tubing 20 and inner lining of rotating head 30 are made of porous bushing material and fit nicely, the bushings 34 are not necessary.

The horizontal beam 50 is held on by the flange of the rotating head 30 and secured with U-bolts to the body of rotating head 30 horizontally. Multiple cylindrical bushings 56 are looped on the horizontal beam for the elevation rotation of solar panels 52. It is identical to the elevation rotation with non-rotating beam discussed previously. In addition, a rechargeable battery and controller box 45 is attached at convenient location of the light pole for night time lighting.

The attachment of azimuth rotation with single or dual linear actuators is similar to those described in Figure 2 and 6. The elevation rotating is similar to that described in Figure 4 except the elevation actuator is mounted on one side of the rotating head and tracker frame rather than the center as depicted in Fig. 4.

The construction of inner tubing 20 and outer rotating head 30 will depend on whether the tubing can be looped on the pole from the top. It will be easier with a complete rotating assembly built and looped from the top before the light fixture is installed. However, retrofitting on existing light pole will be a challenging engineering problem. It will require inner tubing, outer tubing and thrust washer to be built in half cylinders or rings and mated to make full cylindrical inner and outer tubing. Furthermore, the mating seams of each cylinder and each washer ring are preferred to be interleaved while mounting to provide better security for the mating seams.

Although various aspects of the disclosed two-axes tracker have been shown and described, modification may occur to those skilled in the art upon reading the specification. Furthermore, many aspects of the disclosed two-axes tracker is not limited to photovoltaic panel tracking application, but can be applied to much broader aspect of solar tracking, or satellite tracking. For example, the disclosed two-axes tracker can be used for a concentrated photovoltaic panel; a dish concentrator for stirling engine, a heliostat solar reflector, a linear trough solar concentrator, a solar thermo concentrator or a satellite dish antenna. The present application includes such applications or modifications and limited only by the scope of the claims.

## Claims

1. A two-axes solar tracker apparatus **characterized in that** the solar tracker apparatus comprises:
a ground post made of an elongated cylindrical tubing including a top end and a bottom end; wherein said top end providing support to a rotating head; and wherein said top end of said ground post is either open or closed; and wherein said bottom end of said ground post being secured into a substructure such as ground;
said rotating head is made of a larger cylindrical tubing sealed with a top plate; wherein the inner wall of said rotating head is looped on the outer wall of said ground post with two bushings or bearings fitting in the gap at the top and the bottom ends;
an elongated cylindrical horizontal beam (tubing) is attached and balanced on top of said rotating head directly or via a cylindrical bushing;
a tracker frame is mounted on said horizontal beam symmetrically on two sides of said rotating head and symmetrically versus said horizontal beam;
one or two azimuth linear actuators attached horizontally to the side between said ground post and said rotating head for driving the rotating head and tracker frame in azimuth rotation; and
one elevation linear actuator attached vertically between said rotating head and said tracker frame for driving said tracker frame in elevation rotation with axis of rotation centered on said horizontal beam.

2. The solar tracker apparatus of claim 1
**characterized in that**:
all tracker frame, post, tubing and components are made of rustproof steel metal or rustproof metal alloy materials.

3. The solar tracker apparatus of claim 1
**characterized in that**:
the azimuth rotation is facilitated by said outer rotating head looped on said inner ground post with said upper and lower bushings or bearings in-between providing coaxial rotation of said rotating head versus said ground post; and said upper bushings or bearings further carry the load of said rotating head and said tracker frame.

4. The solar tracker apparatus of claim 1
**characterized in that**:
said top bushing is a cylindrical flanged bushing with flange fitting the inner wall of said rotating head; and the body of said flanged bushing fitting the inner wall of said ground post; and an optional washer bushing is fittingly sitting on top of said flanged bushing facilitating easier rotation; and said lower bushing is a cylindrical bushing.

5. The solar tracker apparatus of claim 1
**characterized in that**:
said top bushing is a combination of one or two disk bushings or washer bushings fitting at the top end with a first cylindrical bushing fitting at the top side wall; and said two disk or washer bushings with lubricant sides face each other facilitating easier rotation; and a second cylindrical bushing fits at the lower side wall.

6. The solar tracker apparatus of claim 1
**characterized in that**:
said top bearing is a tapered roller bearing; and said bottom bearing is a cylindrical bushing; and said top bearing is replaced by a combination of a thrust roller bearing at the top end and a cylindrical bushing at the top side wall; and both said cylindrical bushings at the side wall is replaced by roller bearings or needle bearings.

7. The solar tracker apparatus of claim 1
**characterized in that**:
the azimuth rotation of said rotating head is driven by one linear actuator with its jack head and body hinged on extended brackets to the sides of said rotating head and said ground post, respectively; and said attachment positions of said jack head and said body of linear actuator is reversed.

8. The solar tracker apparatus of claim 7
**characterized in that**:
a first bracket is fixed to the side of said rotating head with the jack head of said linear actuator hinged at the end of said first bracket horizontally; and the body of said linear actuator is fixed to a rotating arm; and said rotating arm is hinged on a second bracket fixed on the ground post; and said linear actuator rotates horizontally by the extension of said jack head together with said rotating arm.

9. The solar tracker apparatus of claim 8
**characterized in that**:
said second bracket is duplicated on the opposite side of said ground post for the hinging of said rotating arm to rotate said rotating head in opposite plane.

10. The solar tracker apparatus of claim 1
**characterized in that**:
the azimuth rotation of said rotating head is driven by dual linear actuators hinged on brackets to the sides of said rotating head and said ground post, respectively.

11. The solar tracker apparatus of claim 10 **characterized in that** the solar tracker apparatus further comprises:
an upper and a lower brackets fixed to the sides of said rotating head and said ground post respectively; wherein said two linear actuator bodies are hinged on the open ends of said upper and lower brackets respectively; and said two linear actuators rotates horizontally versus said upper and lower brackets, respectively; and
a rotating ring fittingly looped on said ground post between said upper and lower brackets; and an horizontal arm is attached to the side of said rotating ring; and the end of said horizontal arm is attached with a vertical tubing for hinging; and the jack heads of said two linear actuators are hinged on top and bottom ends of said vertical tubing; wherein said rotating head is rotated in azimuth direction more than 180 degrees by the extension of said jack heads of said lower linear actuator and said upper linear actuator together.

12. The solar tracker apparatus of claim 1
**characterized in that**:
the azimuth rotation of said rotating head versus said ground post is driven by a stepping motor with geared rotor attached on the sides of either said ground post or said rotating head; and a geared ring mated to said geared rotor is looped and fixed on said rotating head or ground post, opposite to said stepping motor attachment; and said geared ring is replaced by a half circle geared ring attached onto said rotating head.

13. The solar tracker apparatus of claim 1
**characterized in that**:
the azimuth rotation of said rotating head is driven by a stepping motor linked to a worm gear attached on the sides of either said ground post or said rotating head horizontally; and a slanted teeth geared ring, mating to said worm gear, is fixed on either said rotating head or said ground post, opposite to said worm gear and stepping motor attachment; and said slanted teeth geared ring is replaced by a half circle slanted geared ring attached onto said rotating head.

14. The solar tracker apparatus of claim 1
**characterized in that**:
the azimuth rotation of said rotating head versus said ground post is driven by a stepping motor with permanent or electromagnetic rotor attached on said ground post with rotor in close contact with said rotating head made of magnetic attractable material; and activated magnetic attraction provide gearless friction force for the rotation of said rotating head.

15. The solar tracker apparatus of claim 1
**characterized in that**:
said horizontal beam is secured and balanced on top of said rotating head via a cylindrical bushing looped on the middle of said horizontal beam facilitating rotation of said horizontal beam; and two-sided symmetrical tracker frame is mounted on said horizontal beam and balanced on said rotating head; and each side of said tracker frame is further balanced on said horizontal beam with the elevation rotating axis centered on said horizontal beam.

16. The solar tracker apparatus of claim 1
**characterized in that**:
said horizontal beam is fixed and secured directly on top and balanced on said rotating head; and said horizontal beam is looped with multiple cylindrical bushings for the mounting of crossing beams of said tracker frame; and said tracker frame is rotated around said fixed horizontal beam with elevation rotating axis centered on said horizontal beam.

17. The solar tracker apparatus of claim 1
**characterized in that**:
a linear actuator with its body hinged vertically on a fix arm attached to said rotating head, and the jack head of said linear actuator is hinged directly on said tracker frame, or hinged vertically on fix arms attached to said horizontal beam; and the extension of the jack head of said linear actuator rotates said tracker frame in elevation direction with rotating axis centered on said horizontal beam.

18. The solar tracker apparatus of claim 1
**characterized in that**:
said tracker frame is made of crossing reversed T-beams mounted and balanced on said horizontal beam; and said crossing reversed T-beams are made of bended sheet metal with reversed U-shaped center T-post in the middle for the mounting and securing of said photovoltaic solar panels.

19. The solar tracker apparatus of claim 1
**characterized in that**:
two electromagnetic wind lock devices with one attached on said ground post adjacent to said rotating head, and the other attached on said top plate adjacent to said horizontal beam; and two drum shaped rod heads are in the center of solenoid of said wind lock devices; and said rod head are attracted to said rotating head and said horizontal beam upon solenoid activation; and said tracker will be locked in desired wind lock position by electromagnetic attraction force.

20. The solar tracker apparatus of claim 19
**characterized in that**:
said wind lock devices are activated between consecutive steps of azimuth and elevation driver activation in a stepwise wind lock of said two-axes solar tracker rotation.

21. The solar tracker apparatus of claim 1
**characterized in that**:
said tracker load may be a photovoltaic solar panel, a concentrated photovoltaic panel, trough or dish concentrator, a heliostat solar reflector, a solar thermo concentrator or a satellite dish antenna.

22. The solar tracker apparatus of claim 1
**characterized in that**:
said rotating head and attachment to ground post is modified to be mounted on a light post; an cylindrical inner tubing with a lower extruded flange ring is attached to support the tracker frame; and an outer flanged bushing rotating head is looped fittingly and matched with the inner tubing flange ring with a thrust washer bushing and optional cylindrical bushings inserted in-between for easier rotation; and a horizontal beam mounted with two sided tracker frames and solar panels is balanced on the flange and secured on the body of said rotating head.

23. The solar tracker apparatus of claim 22
**characterized in that**:
said inner tubing with flange ring, said outer flanged bushing and said thrust washer bushing are made from half cylinders or rings and mated in the middle to make a full cylinder or ring; and the mating seams of each cylinder and each ring are interleaved for retrofit mounting on said light pole.

24. A two-axes solar tracker system **characterized in that** the solar tracker system comprises:
a ground post made of an elongated cylindrical tubing including a top end and a bottom end; and said top end providing support to a rotating head; and said bottom end being secured into a substructure such as ground;
said rotating head is made of a larger cylindrical tubing sealed with a top plate; wherein said rotating head is looped on said ground post with multiple bearings fitting in the gaps between said ground post and said rotating head;
an elongated horizontal beam is attached and balanced on top of said rotating head;
a tracker frame is mounted on said horizontal beam symmetrically on two sides of said rotating head and symmetrically versus said horizontal beam;
an azimuth motor driver attached between said ground post and said rotating head for driving said rotating head and said tracker frame in azimuth rotation; and
an elevation linear actuator attached between said rotating head and said tracker frame (or said horizontal beam) for driving said tracker frame in elevation rotation.

25. The solar tracker system of claim 24
**characterized in that**:
the azimuth rotation is facilitated by said rotating head looped on said inner ground post with said upper and lower bearings in-between for the coaxial rotation of said rotating head versus said ground post.

26. The solar tracker system of claim 24
**characterized in that**:
the azimuth rotation of said rotating head versus said ground post is driven by single linear actuator attached on the sides between said rotating head and said ground post.

27. The solar tracker system of claim 24
**characterized in that**:
said tracker azimuth rotation plane is reversed to opposite side plane by changing the attachment of said linear actuator to the opposite side of said ground post.

28. The solar tracker system of claim 24
**characterized in that**:
the azimuth rotation of said rotating head versus said ground post is driven by linked dual linear actuators attached on the sides of said rotating head and said ground post, respectively; and the combination of said dual linear actuators extensions rotate said rotating head more than 180 degrees in azimuth direction versus said ground post.

29. The solar tracker system of claim 24
**characterized in that**:
the azimuth rotation of said rotating head versus said ground post is driven by a stepping motor with geared rotor and a gear ring attached of the ground post and rotating head, respectively; and said geared rotor is a worm drive rotor.

30. The solar tracker system of claim 24
**characterized in that**:
the azimuth rotation of said rotating head versus said ground post is driven by a stepping motor with a permanent or an electromagnetic gearless rotor with magnetic attraction force for rotation.

31. The solar tracker system of claim 24
**characterized in that**:
elevation rotation of the tracker frame is via rotation of said horizontal beam pivoted on top of said rotating head; and the elevation rotation axis is center on said horizontal beam.

32. The solar tracker system of claim 24
**characterized in that**:
said horizontal beam is fixed and secured directly on top of said rotating head; and the elevation rotation is facilitated by the rotation of said tracker frame with rotating axis pivoted on said horizontal beam.

33. The solar tracker system of claim 24
**characterized in that**:
the elevation rotating is driven by linear actuator hinged between said rotating head and said tracker frame or an extension arm fixed to said horizontal beam; and the extension of said linear actuator rotates said tracker frame in elevation direction with rotating axis centered on said horizontal beam.

34. The solar tracker system of claim 24
**characterized in that**:
two electromagnetic wind lock devices are installed between said ground post and said rotating head; and between said rotating head and said horizontal beam or tracker frame; wherein the activation of magnetized attraction force will lock said tracker at any desired azimuth and elevation position, respectively.

35. The solar tracker system of claim 34
**characterized in that**:
said wind lock devices are activated between consecutive steps of azimuth and elevation rotations in a stepwise wind lock of said solar tracker rotation.

36. The solar tracker system of claim 24
**characterized in that**:
said two-axes tracker is used for a concentrated photovoltaic panel, trough of dish concentrator, a heliostat solar reflector, a solar thermo concentrator or a satellite dish antenna.

37. The solar tracker system of claim 24
**characterized in that**:
said rotating head and attachment to the ground post is modified to be mounted on a light post for the charging of hybrid or electric automobile during the day, or for the storage of electricity generated by solar panel for night lighting.
